# EUROPÄISCHE PATENTANMELDUNG

(11) **EP 1 142 830 A1**
(43) Veröffentlichungstag der Anmeldung: **10.10.2001**
(21) Anmeldenummer: 00107237.0
(22) Anmeldetag: 03.04.2000
(51) Int. Cl.: C01B 13/34, C01G 25/02, C01G 23/07, C01F 7/30

(54) **Nanoskalige pyrogene Oxide, Verfahren zur deren Herstellung und die Verwendung dieser Oxide**

(71) Anmelder: Degussa AG, 40474 Düsseldorf (DE)
(72) Erfinder: Gutsch, Andreas, Dr., 63691 Ranstadt (DE); Hennig, Thomas, Dr., 63571 Gelnhausen (DE); Katusic, Stipan, 65779 Kelkheim (DE); Krämer, Michael, 63477 Maintal (DE); Michael, Günther, Dr., 63791 Karlstein (DE); Varga, Goeffrey J., 63579 Freigericht (DE)

(57) **Zusammenfassung**

Nanoskalige pyrogene Oxide und/oder Mischoxide mit einer BET-Oberfläche zwischen 1 und 600 m²/g und einem Chloridgehalt von weniger als 0,05 Gew.-% werden hergestellt, in dem man metallorganische und/oder metalloidorganische Stoffe bei Temperaturen oberhalb 200 °C in die Oxide umwandelt.

Die Oxide können als Poliermittel in der Elektronikindustrie (CMP) eingesetzt werden.

## Beschreibung

Die Erfindung betrifft nanoskalige pyrogen hergestellte Oxide, ein Verfahren zu ihrer Herstellung sowie ihre Verwendung.

Es ist bekannt, pyrogene Oxide durch Flammenhydrolyse von verdampfbaren Metallchloriden, beziehungsweise aus Metalloidchloriden, zu erzeugen (Ullmanns Enzyklopädie der technischen Chemie, 4. Auflage, Band 21, Seite 44 (1982)).

Diese derartig hergestellten Produkte haben den Nachteil, dass sie, besonders bei basischen Oxiden, hohe Chloridgehalte aufweisen, weil sie nur sehr unvollständig entsäuert werden können. Dabei sind folgende Chloridgehalte bei verschiedenen Oxiden typisch: Titandioxid: ca. 3000 ppm, Aluminiumoxid: ca. 5000 ppm und Zirkonoxid: ca. 6000 ppm.

Eine stärkere Temperaturerhöhung während der Entsäuerung ist nicht möglich, weil dies eine zu starke thermische Belastung darstellen und zu einem unerwünschten Oberflächenverlust führen würde.

Andererseits ist es wünschenswert, dass das Chlorid weitestgehend entfernt wird, weil dieser Restgehalt an Chlorid zu Korrosionsproblemen bei der Anwendung der Oxide führt.

Ferner hat das bekannte Verfahren zur Herstellung der pyrogenen Oxide den Nachteil, dass zum Beispiel beim Aluminiumchlorid oder beim Zirkontetrachlorid sehr hohe Verdampfungstemperaturen angewendet werden müssen, um die Ausgangsstoffe in die Gasphase überführen zu können. Diese Verdampfungsbedingungen stellen an die Materialien der Produktionsanlagen äußerst hohe und damit sehr kostenintensive Ansprüche.

Es besteht somit die Aufgabe, nanoskalige, pyrogene Oxide mit einem geringen Chloridgehalt und einer BET-Oberfläche 'zwischen 1 und 600 m²/g herzustellen, wobei diese Nachteile nicht auftreten.

Gegenstand der Erfindung sind nanoskalige pyrogen hergestellte Oxide und/oder Mischoxide von Metallen und/oder Metalloiden, welche dadurch gekennzeichnet sind, dass sie eine BET-Oberfläche zwischen 1 und 600 m²/g und einen Gesamtchloridgehalt von weniger als 0,05 %, vorzugsweise weniger als 0,02 Gew.-%, aufweisen.

Ein weiterer Gegenstand der Erfindung ist ein Verfahren zur Herstellung der nanoskaligen pyrogen hergestellten Oxide und/oder Mischoxide von Metallen und/oder Metalloiden, welches dadurch gekennzeichnet ist, dass man metallorganische und/oder metalloidorganische Stoffe, gegebenenfalls in einem Lösungsmittel gelöst, gegebenenfalls in einer Flamme, bei Temperaturen oberhalb von 200 °C in die Oxide umwandelt.

Die Edukte können metalloid- und/oder metallorganische Reinstoffe oder beliebige Mischungen derselben darstellen oder als Lösungen in organischen Lösungsmitteln zum Einsatz kommen.

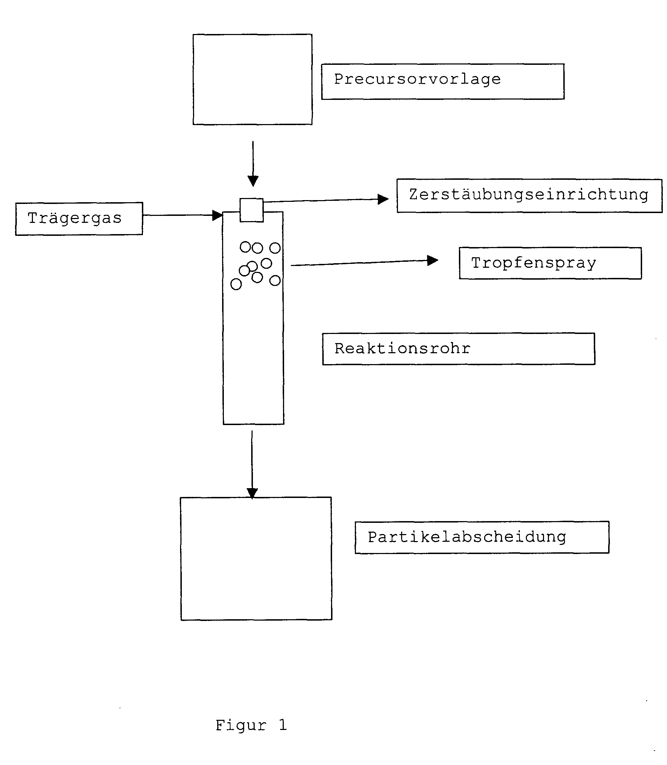

Das erfindungsgemässe Verfahren ist schematisch in Figur 1 dargestellt.

Mit dem erfindungsgemässen Verfahren können zum Beispieldie folgenden Oxide hergestellt werden:
Pyrogen hergestelltes Zirkonoxid mit einem Chlorid-Gehalt von weniger als 0,05 Gew.-%.
Pyrogen hergestelltes amorphes Aluminiumoxid.
Pyrogen hergestelltes alpha Aluminiumoxid.
Pyrogen hergestelltes Titandioxid mit Rutil-Struktur.

Geeignete metallorganische und/oder metalloidorganische Verbindungen können in flüssiger Form als sehr fein verteiltes Spray einem Hochtemperatur-Reaktionsraum zugeführt werden, wobei in dem Hochtemperatur-Reaktionsraum, der vorzugsweise als geschlossenes Strömungsrohr ausgebildet ist, bei Temperaturen oberhalb von 200 °C die Partikelbildung erfolgen kann, wobei als Trägergas dem Hochtemperatur-Reaktionsraum inerte oder reaktive Gase zusätzlich zugeführt werden können und die Gewinnung der Pulver durch bekannte Methoden der Gas-Feststofftrennung mittels Filter, Zyklon, Wäscher oder anderen geeigneten Abscheidern erfolgen kann.

Hierzu können Lösungen von metallorganischen und/oder metalloid-organischen Stoffen (Precursor) in organischen Lösungsmitteln oder auch die reinen Stoffe (Precursor), gegebenenfalls in einer Flamme, bei höheren Temperaturen, gegebenenfalls oberhalb 200 °C, zu den Oxiden umgewandelt werden.

Als Precursor können Verbindungen des Typs MeR eingesetzt werden, wobei R einen organischen Rest, wie beispielsweise Methyl, Ethyl, Propyl, Butyl, oder die entsprechende Alkoxyvarianten oder auch ein Nitration darstellt, und Me ein Metall oder ein Metalloid, wie beispielsweise Si, Ti, Ce, Al, Zr, Y, B, Ge, W, Nb, In, Sb, Zn, Sn, Fe, Mn, Mg, V, Ni, Cu, Au, Ag oder Pt, bedeutet.

Als Lösungsmittel können organische Lösungsmittel, wie Alkohole, wie zum Beispiel Propanol, n-Butanol, iso-Propanol, und/oder Wasser eingesetzt werden.

Der Precursor kann mit einem Druck von 1 bis 10000 bar, bevorzugt von 2 bis 100 bar zugeführt werden.

Die Zerstäubung des Precursors kann mittels Ultraschallvernebler durchgeführt werden.

Die Temperatur kann mindestens 200 °C für amorphe Teilchen und kompakte Kugeln betragen.

Bei einer Temperatur von 1800 °C bis 2400 °C können feine Teilchen erzielt werden.

Ein Vorteil des erfindungsgemässen Verfahrens ist, dass die Precursor nicht gasförmig, sondern flüssig in die Brennkammer eingeführt werden können. Dabei kann durch mindestens eine Einstoffdüse bei Drücken bis zu 10000 bar ein sehr feines Tropfenspray (mittlere Tropfengröße je nach Druck in der Düse zwischen <1 - 500 µm) erzeugt werden, welches dann verbrennt und dabei das Oxid als Feststoff erzeugt.

Weiterhin kann mindestens eine Zweistoffdüse bei Drücken bis zu 100 bar eingesetzt werden.

Die Tropfenerzeugung kann durch Verwendung einer oder mehrerer Zweistoffdrüsen erfolgen, wobei das bei der Zweistoffzerstäubung eingesetzte Gas reaktiv oder inert sein kann.

Bei Verwendung einer Zweistoffdüse ergibt sich der Vorteil, dass die Tropfen mit einem Gasstrahl erzeugt werden. Dieser Gasstrahl kann Sauerstoff oder Stickstoff, oder andere reaktive Gase der Formel (MeClx, wie zum Beispiel Siliziumtetrachlorid (Me entspricht einem Metall oder Metalloid), H₂, CH₄) enthalten. Dadurch kann eine sehr intensive Vermischung der Oxidationsmittel mit dem Precursor erreicht werden. Es ist auch eine zusätzliche Brennstoffzufuhr in unmittelbarer Umgebung der Tropfen möglich, falls der Precursor nicht reaktiv, beziehungsweise der Dampfdruck des Precursor nicht hoch genug ist, um eine schnelle Reaktion zu gewährleisten.

Durch die Verwendung von metallorganischen Precursoren in Lösungsmitteln können homogene Lösungsmittelgemische aus verschiedenen Verbindungen der Formel MeR (Precursor) in beliebigen Konzentrationsverhältnissen einfach hergestellt und bevorzugt in flüssiger Form einer Flamme zugeführt werden, um die entsprechenden chloridarmen pyrogenen Mischoxide zu erhalten. Mit dem erfindungsgemässen Verfahren werden Mischoxide, die vorher wegen stark unterschiedlichem Verdampfungsverhalten der Rohstoffe schlecht, beziehungsweise nicht synthetisierbar waren, leicht zugänglich.

Ein weiterer Vorteil des erfindungsgemässen Verfahrens ist, dass man den flüssigen Precursor nicht nur mit anderen flüssigen Precursoren mischen kann, sondern gegebenenfalls auch feine Partikel, wie zum Beispiel pyrogene Oxide, wie Aerosil, gefällte Kieselsäure, in dem Precursor dispergieren und dadurch bei der Reaktion ein Coating der in dem Precursor dispergierten Partikeln erhalten kann.

Die Umsetzung der Precursor zu den Oxiden kann bevorzugt in einer Knallgasflamme erfolgen. Außer Wasserstoff können weitere brennbare Gase, wie beispielsweise Methan, Propan, Ethan, eingesetzt werden.

Da die metallorganischen Precursoren selbst einen guten Brennstoff darstellen, ist ein weiterer Vorteil des erfindungsgemässen Verfahrens darin begründet, dass man auf die Stützflamme gänzlich verzichten und somit beispielsweise Wasserstoff als teuren Rohstoff einsparen kann.

Ferner ist durch Variation der Luftmenge (für die Verbrennung) und/oder durch Variation der Düsenparameter eine Einflussnahme auf die Oxideigenschaften, beispielsweise auf die BET-Oberfläche, möglich.

Die erfindungsgemässen chloridarmen, pyrogen hergestellten Oxide von Metallen und/oder Metalloiden können als Füllstoff, als Trägermaterial, als katalytisch aktive Substanz, als Ausgangsmaterial zur Herstellung von Dispersionen, als Poliermaterial zum Polieren von Metall-, beziehungsweise Siliziumscheiben in der Elektronikindustrie (CMP-Anwendung), als keramischer Grundstoff, in der Kosmetikindustrie, als Additiv in der Silikon- und Kautschukindustrie, zur Einstellung der Rheologie von flüssigen Systemen, zur Hitzeschutzstabilisierung, in der Lackindustrie, als Farbpigment, als Wärmedämmmaterial, als Antiblocking-Mittel verwendet werden.

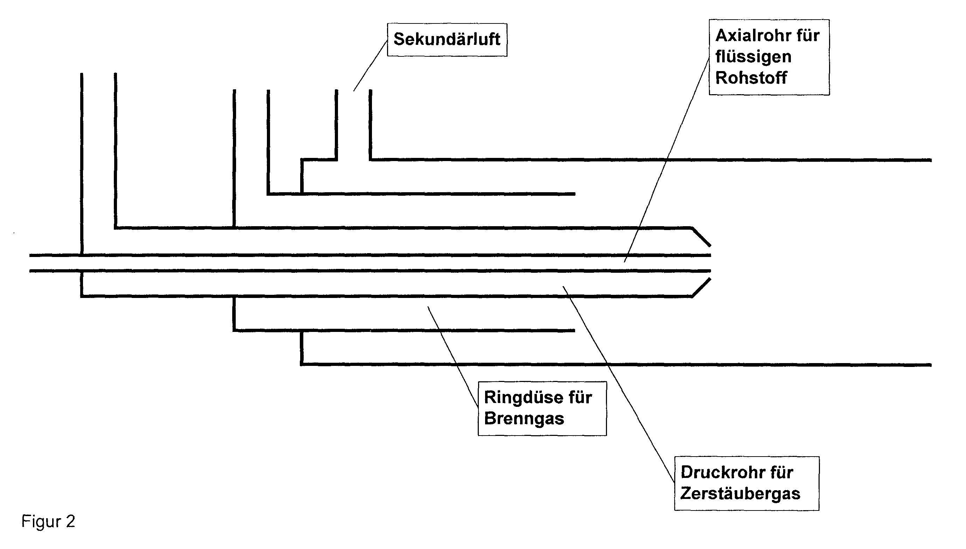

Die erfindungsgemäß verwendbare Brenneranordnung ist in der Figur 2 schematisch dargestellt.

### Beispiel 1

1 l/h Zr(O-n-C₃H₇)₄ als 74-%-ige Lösung in n-Propanol werden unter Stickstoffdruck mit Hilfe einer Düse in das Reaktionsrohr verstäubt. Hier brennt eine Knallgasflamme aus Wasserstoff und Luft. Die Temperatur 0,5 m unterhalb der Flamme beträgt 800 bis 1000 °C. Das ZrO₂ wird in Filtern abgeschieden. Die Phasenanalyse ergibt als Hauptbestandteil monoklines ZrO₂ mit sehr geringem Cl-Gehalt. Wie die Tabelle 1 zeigt, kann durch die Variation des Düsendurchmessers und der Zerstäuberluftmenge die BET-Oberfläche beeinflusst werden.

**Tabelle 1**

| | **Versuch 1** | **Versuch 2** | **Versuch 3** |
|---|---|---|---|
| Förderrate l/h | 1 | 1 | 1 |
| Temperatur °C | 800 - 1000 | 800 - 1000 | 800 - 1000 |
| V H₂ m³/h | 1,5 | 1,5 | 1,5 |
| V Zerstäubergas bar | 2 | 7 | 14 |
| V Luft m³/h | 13,5 | 16 | 20 |
| Düsendurchmesser mm | 1 | 0,8 | 0,8 |
| | | | |
| BET-Oberfläche m²/g | 18 | 32 | 79 |
| Farbe | weiß | weiß | weiß |
| Cl % | 0,01 | 0,01 | 0,01 |
| Stampfdichte g/l | 154 | 154 | |
| Phasenanalyse | Monoklin (Hauptbestandteil) | | |
| | Tetragonal und kubisch (Nebenbestandteil) | | |
| Trocknungsverlust % | 0,5 | | |
| Glühverlust % | 0,0 | | |
| pH-Wert | 4,6 | | |
| ZrO₂ % | 97,55 | 97,60 | |
| HfO₂ % | 2,14 | 2,14 | |

### Beispiel 2

Aluminiumnitrat als 3 %ige (Versuch 1) oder 7,5 %ige (Versuch 2) wässerige Lösung, beziehungsweise flüssiges Aluminiumtri-sek-butylat (Versuch 3 und 4) werden mit Hilfe von Druckluft und einer Düse (Durchmesser 0,8 mm), beziehungsweise bei Versuch 2 mit einem Zerstäuber (Durchmesser 1,1mm) in das Reaktionsrohr verstäubt. Hier brennt eine Knallgasflamme aus Wasserstoff, Luft und/oder Sauerstoffgemisch. Die Temperatur 0,5 m unterhalb der Flamme beträgt 250 bis 1250 °C. Das Aluminiumoxid wird in Filtern abgeschieden. Die Ergebnisse sind in der Tabelle 2 dargestellt.

**Tabelle 2**

| | **Versuch 1** | **Versuch 2** | **Versuch 3** | **Versuch 4** |
|---|---|---|---|---|
| Förderrate ml/h | 320 | 230 | 100 | 120 |
| Temperatur °C | 650 - 250 | 700 - 1200 | 560 - 900 | 1150 - 1300 |
| V H₂ m³/h | 0,6 | 1,5 | 0,9 | 1,6 |
| V Zerstäubergas Trägergas bar | 1,4 | 0 | 2-Stoff-Düse 0,8 mm Durchmesser 2,3 | 0 |
| V Luft m³/h | 1,0 | 2,2 | 2,8 | 2,1 |
| BET m²/g | 3,1 | 9 | 205 | 16 |
| D 50 (Cilas) | 1,52 | 24,7 | 3,47 | 4,52 |
| Phase | 100 % amorph | 70 % alpha 30 % theta | 16 % delta 84 % gamma | 100 % alpha |
| TEM µm | Kompakte Kugeln 0,2 - 2 | Kristallite bis 4 µm | 0,005-0,0010 | 0,002-0,050 |
| Cl-Gehalt % | | 0,018 | | |

### Beispiel 3

Titan-bis-(ammoniumlactato)-dihydroxid ((CH₃CH(O-) CO₂NH₄)₂Ti(OH)₂) als 50 %ige wässerige Lösung wird mit Hilfe von Druckluft und einem Vernebler bei Versuch 1 bzw. bei Versuch 4 mit einer Zweistoffdüse in das Reaktionsrohr verstäubt. Bei Versuch 2 und 3 wird Titanoxysulfat (TiOSO₄ xH₂O) als 5 %ige Lösung in iso-Propanol mit einem Vernebler in das Reaktionsrohr verstäubt. Hier brennt eine Knallgasflamme aus Wasserstoff, Luft und/oder Sauerstoffgemisch. Die Temperatur 0,5 m unterhalb der Flamme beträgt 740 bis 1150 °C. Das Titandioxid wird in Filtern abgeschieden. Die Daten sind in der Tabelle 3 dargestellt.

**Tabelle 3**

| | Versuch 1 | Versuch 2 | Versuch 3 | Versuch 4 |
|---|---|---|---|---|
| Förderrate | 200 ml/h | 300 ml/h | 310 ml/h | 120 ml/h |
| Temperatur °C | 740-1150 | 320-410 | 375-580 | 444-668 |
| V H₂ m³/h | 1,8 | - | - | 1,0 |
| V Vernebler Trägergas bar | 1,8 | 1,2 | 1,5 | 1,5 |
| V Luft m³/h | 1,3 | - | - | 3,5 |
| BET m²/g | 3,1 | 0,9 | 3,1 | 14 |
| D 50 (Cilas) | 0,92 | 4,09 | 1,20 | 1,5 |
| Phase | 100 % Rutil | 100 % amorph | 95 % amorph 5% Anatas | 77 % Anatas 23 % Rutil |
| TEM um | 0,1 - 2 | | 0,1 -3 | bis 1 |

## Patentansprüche

1. Nanoskalige pyrogen hergestellte Oxide und/oder Mischoxide von Metallen und/oder Metalloiden, **dadurch gekennzeichnet, dass** sie eine BET-Oberfläche zwischen 1 und 600 m²/g und einen Gesamtchloridgehalt von weniger als 0,05 Gew.-% aufweisen.

2. Verfahren zur Herstellung von nanoskaligen pyrogen hergestellten Oxiden und/oder Mischoxiden von Metallen und/oder Metalloiden gemäss Anspruch 1, **dadurch gekennzeichnet, dass** man metallorganische und/oder metalloidorganische Stoffe, gegebenenfalls in einem Lösungsmittel gelöst, gegebenenfalls in einer Flamme, bei Temperaturen oberhalb von 200 °C in die Oxide umwandelt.

3. Verwendung der nanoskaligen pyrogen hergestellten Oxide und/oder Mischoxide von Metallen und/oder Metalloiden als Füllstoff, als Trägermaterial, als katalytisch aktive Substanz, als Ausgangsmaterial zur Herstellung von Dispersionen, als Poliermaterial zum Polieren vom Metall- und/oder Siliziumscheiben in der Elektroindustrie (CMP-Anwendung), als keramischer Grundstoff, in der Kosmetikindustrie, als Additiv in der Silikon- und Kautschukindustrie, zur Einstellung der Rheologie von flüssigen Systemen, zur Hitzeschutzstabilisierung, in der Lackindustrie, als Farbpigment, als Wärmedämmmaterial, als Antiblocking-Mittel.

4. Pyrogen hergestelltes Zirkonoxid mit einem Chlorid-Gehalt von weniger als 0,05 Gew.-%.

5. Pyrogen hergestelltes amorphes Aluminiumoxid.

6. Pyrogen hergestelltes alpha Aluminiumoxid.

7. Pyrogen hergestelltes Titandioxid mit Rutil-Struktur.

8. Pyrogen hergestelltes amorphes Titandioxid.

9. Verfahren gemäß Anspruch 2 **dadurch gekennzeichnet, dass** geeignete metallorganische und/oder metalloidorganische Verbindungen in flüssiger Form als sehr fein verteiltes Spray einem Hochtemperatur-Reaktionsraum zugeführt werden, in dem Hochtemperatur-Reaktionsraum, der vorzugsweise als geschlossenes Strömungsrohr ausgebildet ist, bei Temperaturen oberhalb von 200 °C die Partikelbildung erfolgt, wobei als Trägergas dem Hochtemperatur-Reaktionsraum inerte oder reaktive Gase zusätzlich zugeführt werden und die Gewinnung der Pulver durch bekannte Methoden der Gas-Feststofftrennung mittels Filter, Zyklon, Wäscher oder anderen geeigneten Abscheidern erfolgt.

10. Verfahren gemäss Anspruch 2 **dadurch gekennzeichnet, dass** die Edukte metalloid- und/oder metallorganische Reinstoffe sind oder beliebige Mischungen derselben darstellen oder als Lösungen in organischen Lösungsmitteln oder als wässerige Lösung zum Einsatz kommen.

11. Verfahren gemäss Anspruch 2 **dadurch gekennzeichnet, dass** die Tropfenerzeugung durch Verwendung mindestens einer Einstoffdüse mit Drücken bis zu 10000 bar erfolgt.

12. Verfahren gemäss Anspruch 2 **dadurch gekennzeichnet, dass** die Tropfenerzeugung durch Verwendung einer oder mehrerer Zweistoffdüsen erfolgt, wobei das bei der Zweistoffzerstäubung eingesetzte Gas reaktiv oder inert sein kann.
